# NEUE EUROPÄISCHE PATENTSCHRIFT

(11) **EP 0 980 929 B2**
(45) Veröffentlichungstag und Bekanntmachung des Hinweises auf die Entscheidung über den Einspruch: **30.08.2006**
(45) Hinweis auf die Patenterteilung: 18.06.2003
(21) Anmeldenummer: 99115775.1
(22) Anmeldetag: 10.08.1999
(51) Int. Cl.: D06F 39/00, G05B 19/10

(54) **Verfahren und Vorrichtung zum Bedienen eines programmgesteuerten Haushaltgeräts**
Method and device to operate a program controlled domestic appliance
Procédé et dispositif de commande d'un appareil domestique d'un programme de contrôle

(30) Priorität: 19.08.1998 DE 19837789
(43) Veröffentlichungstag der Anmeldung: 23.02.2000
(73) Patentinhaber: BSH Bosch und Siemens Hausgeräte GmbH, 81739 München (DE)
(72) Erfinder: Geyer, Johannes, 81667 München (DE)

(56) Entgegenhaltungen:
- DE-A- 3 403 487
- DE-A- 4 422 128
- DE-A- 19 615 357
- DE-C- 3 133 176
- GB-A- 2 017 341
- US-A- 4 341 197
- US-A- 5 187 797

## Beschreibung

Die Erfindung betrifft ein Verfahren zum Bedienen eines programmgesteuerten Haushaltgeräts, bei dem zeitlich aufeinander folgend Bedienschritte vorgenommen werden können, mit einer Anzeigeeinrichtung, durch die wenigstens ein als nächster vorzunehmender Bedienschritt im Klartext angezeigt, dadurch zu seiner Vornahme aufgefordert und nach Vornahme der Bedienungshandlung durch eine Anzeige des nächsten Bedienungsschrittes ersetzt werden kann, sowie eine Bedienvorrichtung zur Durchführung des Verfahrens.

Ein solches Verfahren ist durch die US 5 187 797 bekannt. Das daraus bekannte Verbindungssystem beschreibt eine Bedienungsvorrichtung, bei der die Benutzungsperson Schritt für Schritt nach den Wünschen abgefragt und danach zu entsprechenden Bedienungshandlungen aufgefordert wird. Dazu sind die Abfragen und entsprechenden Bedienungshandlungen hierarchisch geordnet, so dass beispielsweise bei der Eingabe eines Programmablaufs kein Schritt vergessen werden kann.

Aus DE 28 49 417 A1 ist noch ein programmgesteuertes Haushaltgerät mit Bedienelementen, mit denen Bedienschritte zeitlich aufeinander folgend vorgenommen werden können. Bereits zum Auswählen des Betriebsprogramms und dessen Parameter müssen mit zahlreichen Wahlschaltern Einstellungen nacheinander vorgenommen werden. Dabei können Bedienschritte unbedingt notwendig oder auch freigestellt sein, wie beispielsweise optionale Zusatzprogrammfunktionen, die für den Betrieb nicht zwingend ausgewählt werden müssen. Femersind bei der Bedienung in der Regel noch weitere Schritte beispielsweise zum Einschalten des Geräts, zum Starten des gewählten Betriebsprogramms oder allgemein für verschiedene Funktionen erforderlich, wie das Öffnen der Fülltür bei einer Wäschebehandlungsmaschine. Die Bedienelemente sind üblicherweise Dreh- oder Druckschalter mit zugeordneten Hinweisen, aus denen hervorgeht, welche Funktion mit dem entsprechenden Bedienelement ausgelöst oder eingestellt werden kann. Im Fall von Einstellelementen sind üblicherweise die mit ihnen auswählbaren Einstellungsmöglichkeiten angegeben. Beispielsweise ist bei Waschmaschinen als Programmwahlschalter häufig ein Drehschalter mit zahlreichen Schaltstellungen für die einstellbaren Programme vorgesehen, wobei jede Schaltstellung mit einem Hinweis auf das zugeordnete Programm versehen ist. Auf diese Weise werden einer Bedienperson die zur Auswahl stehenden Einstellungsmöglichkeiten angezeigt, aus denen sie durch entsprechende Einstellung.des jeweiligen Bedienelements eine auswählt.

Weiterhin ist aus der DE 28 24 973 A1 ein Haushaltgerät bekannt, dessen Bedienvorrichtung eine vorprogrammierte Steuerung und eine alphanumerische Anzeigeeinrichtung mit transparenten Berührungssensoren auf der Anzeigefläche aufweist, wobei der Bedienperson über die Anzeige Programmvorschläge angeboten werden, die durch Berühren der Sensoren ausgewählt werden können. Die Einstellung, die mit den transparenten Berührungssensoren vorgenommen werden kann, ergibt sich aus der aktuellen Anzeige der darunter befindlichen Anzeigeeinrichtung. Auch in diesem Fall werden der Bedienperson die zur Verfügung stehenden Einstellungsmöglichkeiten angezeigt, aus denen sie mit Hilfe von Bedienelementen die gewünschte auswählen beziehungsweise einstellen muss.

Diese bekannten Bedienverfahren und -vorrichtungen weisen insbesondere den Nachteil auf, dass der Bedienperson zwar angezeigt wird, was mit den verschiedenen Bedienelementen eingestellt oder ausgelöst werden kann, nicht jedoch, welches Bedienelement zu einem bestimmten Zeitpunkt betätigt werden muss beziehungsweise welcher Bedienschritt vorzunehmen ist. Dieser Nachteil einer mangelhaften Benutzerführung besteht bei sehr vielen Geräten und ergibt sich aus der Tatsache, dass den Bedieneiementen nur Hinweise auf ihren Zweck zugeordnet sind und bei einer Bedienperson vorausgesetzt wird, dass sie die vorzunehmenden Bedienschritte selbst kennt und nur noch die entsprechenden Bedienelemente auffinden und betätigen muss, wozu die Hinweise bei den bekannten Verfahren ausreichend sind. Selbst das aus der DE 28 24 973 A1 bekannte Bedienverfahren, bei dem gegenüber den bekannten Auswahlschaltern mit aufgedruckten Hinweisen eine technisch wesentlich vielseitigere vorprogrammierte Steuerung mit einer Anzeigeeinrichtung eingesetzt wird, beschränkt sich auf die bloße Anzeige der vorhandenen Einstellungsmöglichkeiten. Zusätzlich kann es in diesem Fall bei zahlreichen Einstellungsmöglichkeiten vorkommen, dass eine große Anzeigeeinrichtung benötigt wird, die allerdings für die Bedienperson leicht unübersichtlich wird.

Für die Bedienperson besteht damit bei den bekannten Verfahren und Vorrichtungen die Notwendigkeit, die Reihenfolge der vorzunehmenden Bedienschritte selbst kennen zu müssen. Die Bedienung eines Haushaltgerätes wird in der Regel von technischen Laien durchgeführt und durch den notwendigen Lemprozess erschwert. Weiterhin wird dadurch beispielsweise aufgrund von Unkenntnis oder Unachtsamkeit die Gefahr einer Fehlbedienung erhöht.

Der vorliegenden Erfindung liegt die Aufgabe zugrunde, ein Verfahren sowie eine Vorrichtung der eingangs genannten Art zu schaffen, bei denen eine benutzerfreundliche, einfache, sichere und übersichtliche Bedienung möglich ist.

Erfindungsgemäß wird diese Aufgabe durch ein Verfahren gelöst, bei dem die Anzeigedauer einer Aufforderung zum Vornehmen eines nächsten Bedienschrittes, der nicht zwingend vorgenommen werden muss, begrenzt ist und nach Ablauf der Anzeigedauer ohne Vornahme der Bedienungshandlung auf eine Anzeige wenigstens des darauf folgenden vorzunehmenden Bedienschritts geschaltet wird. Ferner gibt die Erfindung eine Bedienvorrichtung zur Durchführung dieses Verfahrens an, bei der die Anzeigeeinrichtung derartig mit einer Programmsteuereinrichtung verbunden ist, dass sie einen vorzunehmenden Bedienschritt, der nicht zwingend vorgenommen werden muss, im Klartext nur eine gewisse Zeit lang anzeigt und danach ohne Vornahme der Bedienungshandlung wenigstens eine Aufforderung zum Vornehmen des darauf folgenden Bedienschritts anzeigt.

Auf diese Weise muß die Bedienperson nicht selbst die Bedienfolge kennen und es wird die Gefahr verringert, daß ein Bedienschritt übersprungen oder vergessen wird. Dabei können die Bedienelemente auf herkömmliche Art und Weise gestaltet bleiben, so daß sich die Bedienperson nicht umstellen muß. In der Bedienblende ist in diesem Fall nur zusätzlich eine Anzeigeeinrichtung vorzusehen, die während des Bedienvorgangs die Bedienperson durch die nötigen Aufforderungen führt beziehungsweise unterstützt. Von einer solchen Anzeigeeinrichtung kann beispielsweise nach den Einschalten des Geräts zunächst eine einfache Begrüßung, um der Bedienperson die Betriebsbereitschaft zu signalisieren, und nach einer gewissen Zeit die Aufforderung "Bitte Programm wählenl" angezeigt werden. Diese Anzeige kann nach erfolgter Programmwahl oder nach einer gewissen Zeit erlöschen, in der von einem Abschluß der Programmeinstellung durch die Bedienperson ausgegangen werden kann. Die Bedienperson wird damit zum richtigen Bedienschritt aufgefordert und auch implizit über den aktuellen Betriebsstatus informiert, nämlich daß im vorliegenden Fall die Betriebsprogrammwahl noch nicht erfolgt ist. Sollte die Bedienperson beim Bedienvorgang unterbrochen werden, so kann später aus einer angezeigten Aufforderung ersehen werden, mit welchem Bedienschritt fortgefahren werden muß. Dabei ist es auch denkbar, mehrere Aufforderungen anzuzeigen. Falls ein Bedienschritt beispielsweise nicht unbedingt erforderlich ist, kann er zusammen mit einem anderen angezeigt werden, der zu diesem Zeitpunkt ebenfalls vorgenommen werden kann. Dies können beispielsweise optionale Zusatzprogrammfunktionen sein, die vor dem Starten des Betriebsprogramms wahlweise zusätzlich ausgewählt werden können, jedoch nicht unbedingt erforderlich sind. In einem solchen Fall könnte die Aufforderung "Zusatzfunktionen wählen oder Programm starten!" angezeigt werden.

Weiterhin kann die erfindungsgemäße Lösung bei vorhandenen Bedienvorrichtungen einfach nachgerüstet werden, da dazu unabhängig von der Art der Bedienelemente nur eine Anzeigeeinrichtung zusätzlich vorgesehen werden muß. Vorteilhafterweise kann diese Anzeigeeinrichtung von einer zentralen Steuereinrichtung angesteuert werden, über die programmgesteuerte Haushaltgeräte in der Regel ohnehin verfügen.

In einer besonders vorteilhaften Ausführungsform wird von der Anzeigeeinrichtung wenigstens eine Aufforderung zum Vornehmen des nächsten Bedienschritts oder der aktuelle Betriebsstatus angezeigt. Der Betriebsstatus kann beispielsweise der Betriebsfortschritt oder die laufende Betriebsphase sein, zum Beispiel, ob eine Wäschbehandlungsmaschine gerade wäscht, schleudert oder Waschlauge abpumpt. Ebenso kann der Betriebsstatus die Endezeit des Betriebsprogramms oder eine andere Angabe über den Betrieb oder einen Störungszustand sein. Dabei müssen die wenigstens eine Aufforderung und der aktuelle Betriebsstatus nicht gleichzeitig angezeigt werden. Angaben zum Betriebsstatus werden vorzugsweise während des Ablaufens einer Betriebsphase angezeigt, da während dieser Zeit in der Regel keine Handlungen von Seiten der Bedienperson nötig sind und somit auch keine Aufforderung zur Vornahme eines Bedienschritts angezeigt werden muß. Das Verfahren wird dadurch für die Bedienperson wesentlich übersichtlicher, da die Anzahl der gleichzeitig angezeigten Meldungen verringert wird. Auch kann in diesem Fall vorteilhafterweise eine kleinere und kostengünstigere Anzeigeeinrichtung werden, die ebenfalls zur Übersichtlichkeit bei der Bedienung beiträgt.

Die wenigstens eine Aufforderung zum Vornehmen eines nächsten Bedienschritts kann zusammen mit dem aktuellen Betriebsstatus angezeigt werden. Beispielsweise kann bei einer Wäschebehandlungsmaschine am Ende des Betriebsprogramms die Meldung "Programm fertig, bitte Wäsche entnehmen!" erfolgen. Damit werden der Bedienperson sinnvollerweise zwei Angaben zusammen angezeigt, die in der Regel ohnehin miteinander verknüpft sind, da der nächste Bedienschritt üblicherweise vom erreichten Betriebsprogrammstatus abhängt.

Weiterhin ist es möglich, daß eine Aufforderung zum Vornehmen eines nächsten Bedienschritts, der nicht zwingend vorgenommen werden muß, nur eine gewisse Zeit angezeigt wird und danach wenigstens eine Aufforderung zum Vornehmen eines darauf folgenden Bedienschritts angezeigt wird. Die Bedienperson wird somit zumindest eine gewisse Zeit auf die Möglichkeit hingewiesen, einen bestimmten Bedienschritt vorzunehmen, so daß die Gefahr, diesen Bedienschritt zu vergessen oder zu übersehen, wesentlich geringer ist.

Falls von der Anzeigeeinrichtung der aktuelle Betriebsstatus angezeigt wird, kann dies vorteilhafterweise in Laufschrift geschehen. Dadurch kann dem Betrachter bereits durch die Art der Anzeige vermitteltwerden, daß es sich um eine bestimmte Art von Information handelt. Beispielsweise kann so die gerade ablaufende Betriebsphase sinnfällig angezeigt werden. Auf diese Weise kann erreicht werden, daß die Bedienperson ohne Lesen der Anzeige bereits durch den Laufschriftcharakter erkennt, daß es sich um Informationen über den Betriebsstatus handelt, die im Gegensatz zu einer Bedienaufforderung keine Tätigkeit der Bedienperson erfordern. Im Gegensatz dazu kann eine Aufforderung zum Vornehmen eines Bedienschritts in blinkender Schrift angezeigt werden. Dadurch wird die Aufmerksamkeit der Bedienperson gerade in den Fällen stärker auf die Anzeige gezogen, in denen die Vornahme einer Handlung durch die Bedienperson erwartet wird.

Die aktuelle Betriebsphase kann zusammen mit einem Hinweis auf eine während der aktuellen Betriebsphase aktivierbare Funktion angezeigt werden. Insbesondere kann dies eine Schnellgangfunktion sein, mit der durch Betätigen eines Schnellgangbedienelements insbesondere in Form einer Taste der verbleibende Teil der laufenden Betriebsphase übersprungen und direkt zur nächsten gesprungen werden kann. Die Bedienperson kann damit auf mögliche Bedienfunktionen aufmerksam gemacht werden, die auch während einer bereits laufenden Betriebsphase vornehmbar sind.

Die aktuelle Betriebsphase kann auch zur besseren Information der Bedienperson zusammen mit der nächsten angezeigt werden. Dies empfiehlt sich insbesondere in Verbindung mit der Schnellgangfunktion, damit die Bedienperson vorher weiß, zu welcher Betriebsphase sie gegebenenfalls weiterspringt. Eine Unterscheidung zwischen den beiden Betriebsphasen kann hier beispielsweise dadurch erreicht werden, daß die laufende Phase in Laufschrift angezeigt wird.

Weiterhin kann bei einer ersten Betätigung des Schnellgangbedienelements zunächst die nächste Betriebsphase angezeigt werden, und erst bei der zweiten Betätigung des Schnellgangbedienelements der verbleibenden Teil der laufenden Betriebsphase tatsächlich übersprungen und die nächste Betriebsphase gestartet werden. Die Bedienperson kann sich auf diese Weise vor der Entscheidung, ob die laufende Betriebsphase abgebrochen werden soll, über die in diesem Fall als nächstes gestartete Phase informieren. Dabei kann vorgesehen sein, daß zum tatsächlichen Weiterschalten die zweite Betätigung innerhalb einer gewissen Zeit nach einer ersten geschehen muß und andernfalls nach Ablauf dieser Zeit die erste Betätigung unberücksichtigt bleibt. Andemfalls könnte es vorkommen, daß die Bedienperson sich zum zweiten Mal die nächste Betriebsphase anzeigen lassen möchte und durch die zweite Betätigung des Schnellgangbedienelements unbeabsichtigt bereits tatsächlich zu dieser Betriebsphase weiterschaftet.

Das Schnellgangbedienelement kann als Taste mit zwei Druckpunkten ausgebildet sein, wobei nach Überschreiten des ersten Druckpunkts die nächste Betriebsphase angezeigt und bei Überschreiten des zweiten Druckpunkts der verbleibende Teil der laufenden Betriebsphase übersprungen und die nächste Betriebsphase gestartet wird. Der Benutzer kann sich auch auf diese Weise vor dem tatsächlichen Weiterschalten die nächste Betriebsphase zunächst anzeigen lassen.

Die erfindungsgemäße Lösung kann bei Backöfen, Kochmulden, Geschirrspülern oder Kühlgeräten angewendet werden.

Besonders vorteilhaft ist die Anwendung der Erfindung aber bei einer Wäschebehandlungsmaschine, wie eine Waschmaschine, ein Wäschetrockner oder ein Waschtrockner, da diese Geräte in der Regel umfangreiche Einstellungen und zahlreiche Bedienschritte erfordern. Im Fall einer Waschmaschine oder eines Waschtrockners kommen als Bedienschritte beispielsweise in Frage das Wählen eines Betriebsprogramms, das Einfüllen von Waschmittel, das Einstellen der Behandlungstemperatur und der Schleuderdrehzahl beziehungsweise, ob oder auf welche Art geschleudert werden soll, das Einstellen von optionalen Zusatzprogrammfunktionen (beispielsweise das Waschen mit erhöhter Wassermenge, die zeitliche Verkürzung des Waschvorgangs, das Vorschalten einer Vorwäsche, eine Intensivierung des Spülens, das Nachschalten einer Knitterschutzfunktion oder das vorherige Einweichen der Wäsche) oder das Entnehmen der Wäsche.

Weitere Einzelheiten, Merkmale und Vorteile der Erfindung ergeben sich aus der folgenden Beschreibung eines Ausführungsbeispiels unter Bezugnahme auf die Zeichnungen. Darin zeigen
- Fig. 1: eine Vorderansicht eines mit einer erfindungsgemäßen Bedienvorrichtung ausgerüsteten Haushaltgeräts,
- Fig. 2: eine Vorderansicht einer Ausführungsform der erfindungsgemäßen Bedienvorrichtung und
- Fig. 3 bis 5: je einen Ausschnitt der erfindungsgemäßen Bedienvorrichtung aus Fig. 2 bei verschiedenen Betriebsphasen beziehungsweise Bedienschritten.

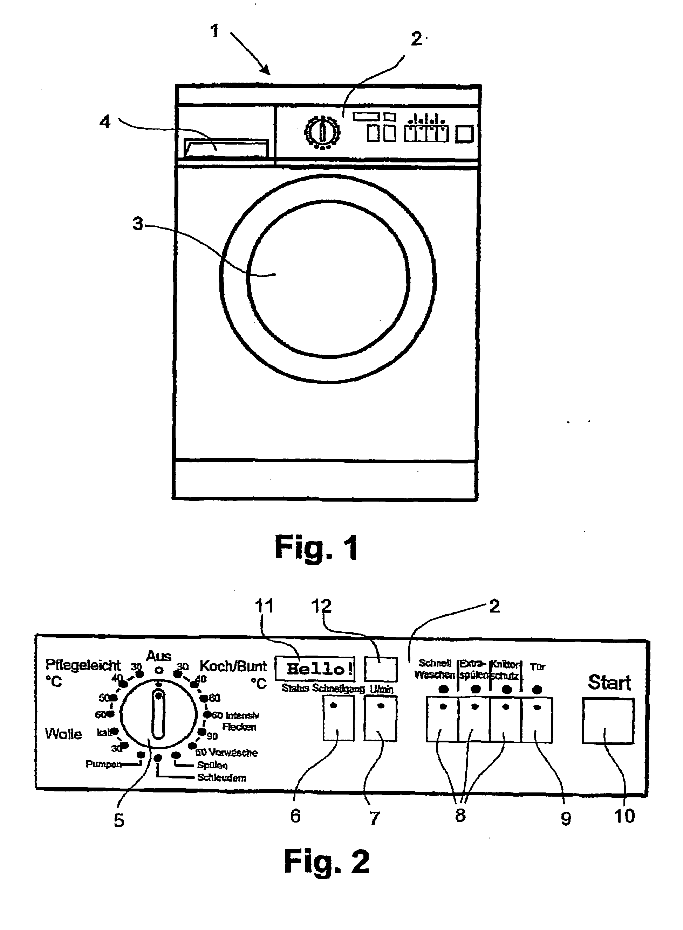

Fig. 1 zeigt als programmgesteuertes Haushaltgerät eine Waschmaschine 1 von vorne. In deren Vorderfront ist rechts oben neben dem Griff 4 einer Waschmittelschublade eine Bedienblende 2 angeordnet. Weiterhin weist die Waschmaschine 1 unterhalb der Bedienblende 2 eine Fülltür 3 zum Hineingeben der Wäsche auf.

In Fig. 2 ist die Bedienblende 2 vergrößert dargestellt, in der zahlreiche Bedienelemente 5 bis 10 sowie zwei Anzeigeeinrichtungen 11, 12 angeordnet sind. Links befindet sich ein Drehschalter 5 für die Auswahl des Betriebsprogramms, um den herum auf der Bedienblende 2 Betriebsprogramme aufgedruckt sind, die den einzelnen Drehschaltstellungen zugeordnet sind. Mit dem Drehschalter 5 kann auch die Waschmaschine 1 eingeschaltet werden, indem er aus seiner "Aus"-Stellung gebracht wird.

Die sich rechts anschließenden sieben Druckschalter 6 bis 10 sind von links nach rechts betrachtet: Eine Schnellgangtaste 6 zum Überspringen des verbleibenden Teils der laufenden Betriebsphase, eine Drucktaste 7 zum Einstellen der Schleuderdrehzahl, drei Drucktasten 8 zum Auswählen der optionalen Zusatzbetriebsprogrammfunktionen "Schnell Waschen", "Extraspülen" und "Knitterschutz", weiterhin ein Druckschalter 9 zum Öffnen der Fülltür 3 und ein Druckschalter 10 zum Starten des eingestellten Betriebsprogramms.

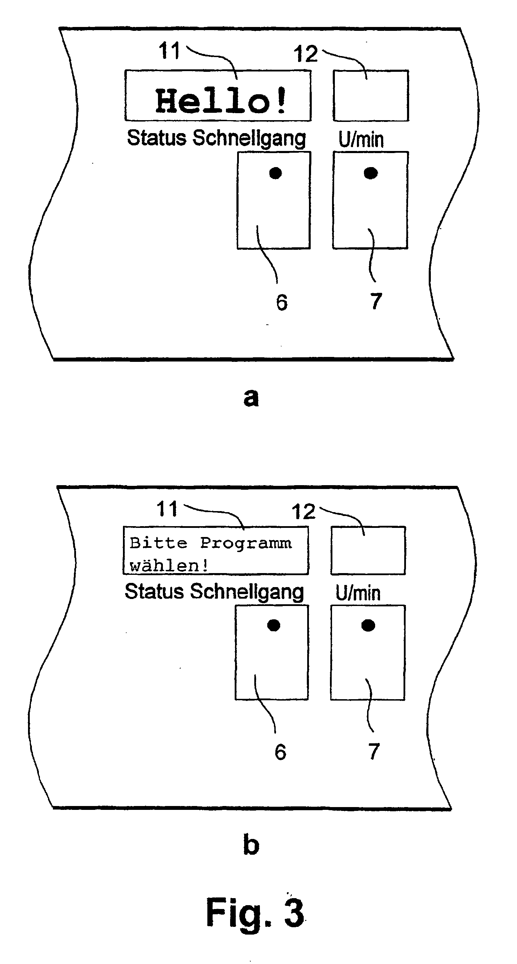

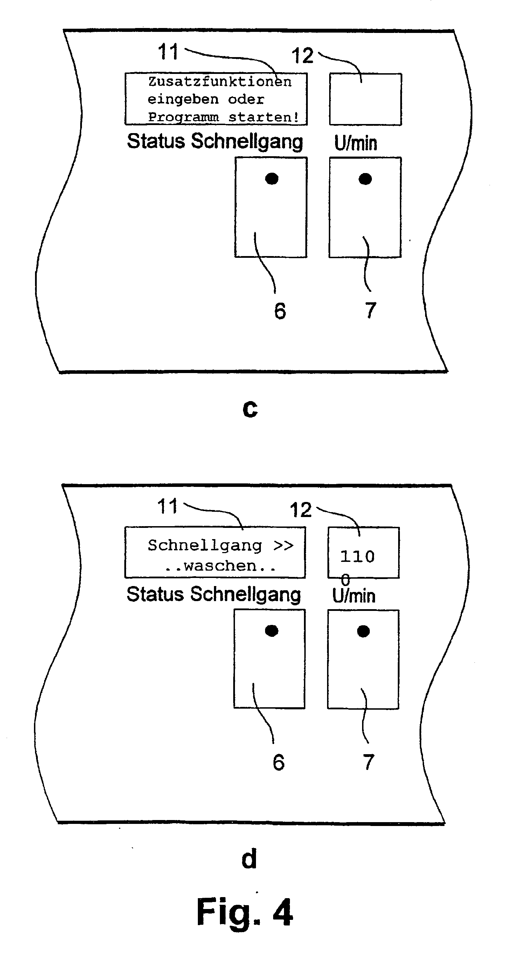

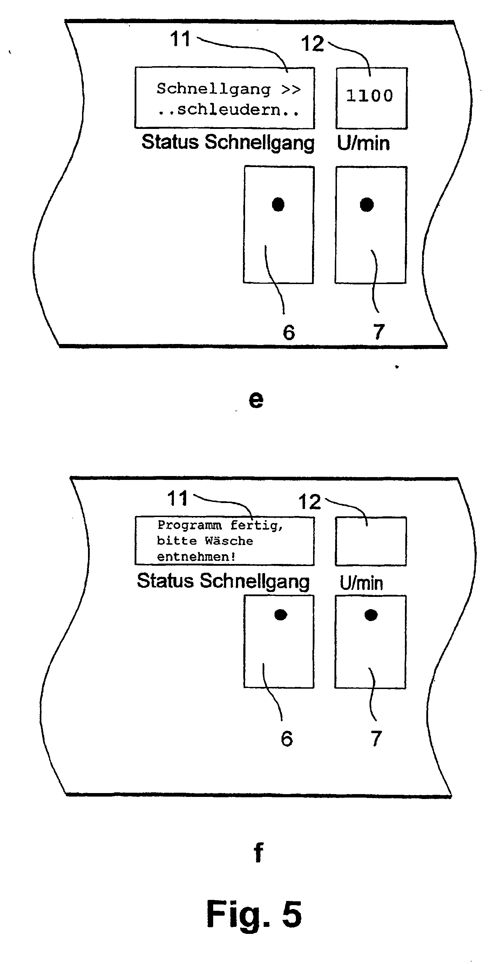

Fig. 3 bis 5 zeigen den Ausschnitt der Bedienblende 2, in dem die Anzeigeeinrichtungen 11, 12 sowie die Druckschalter 6, 7 angeordnet sind, bei verschiedenen Betriebs- beziehungsweise Bedienzuständen a bis f. Zustand a zeigt den Bedienblendenausschnitt unmittelbar nach dem Einschalten der Waschmaschine 1. In diesem Betriebszustand wird einfach die Meldung "Hello I" als Begrüßung angezeigt, um einer Bedienperson die Betriebsbereitschaft der Waschmaschine 1 zu signalisieren. Nach einer bestimmten Zeit wird automatisch Zustand b eingenommen, in dem die Aufforderung "Bitte Programm wählen!" angezeigt wird. Diese Aufforderung wird trotz der Tatsache angezeigt, daß zum Einschalten der Waschmaschine 1 der Drehschalter 5 aus der "Aus"-Stellung gebracht worden ist und somit bereits ein Betriebsprogramm eingestellt ist, um die Bedienperson zur Vermeidung von Fehlbedienungen zu einer aufmerksamen Einstellung des Betriebsprogramms anzuhalten. Eine gewisse Zeit nach der letzten Betätigung des Drehschalters 5, nach der von einem Abschluß der Programmeinstellung seitens der Bedienperson ausgegangen werden kann, erlischt die Aufforderung zur Programmwahl und es wird Zustand c erreicht. In dieser Phase wird die Meldung "Zusatzfunktionen oder Programm starten" angezeigt, da nach erfolgter Programmwahl das Programm bereits gestartet werden könnte; jedoch ebenfalls wenigstens eine optionale Betriebsprogrammfunktion mittels der Druckschalter 8 ausgewählt werden kann. Die Bedienperson besitzt an dieser Stelle zwei Möglichkeiten für den weiteren Bedienvorgang, aus denen sie eine auswählen kann. Im vorliegenden Fall wurde keine Zusatzbetriebsprogrammfunktion ausgewählt, so daß das Betriebsprogramm mit dem Druckschalter 10 gestartet und der Zustand d erreicht wurde. In diesem Zustand zeigt die Anzeigeeinrichtung 11 in der unteren Zeile in Laufschrift die aktuelle Betriebsphase "..waschen.." und in der Zeile darüber den Hinweis "Schnellgang >>" an, um die Bedienperson an die Möglichkeit zu erinnern, die laufende Betriebsphase jederzeit überspringen zu können. Die Schleuderdrehzahl wird von der Bedienvorrichtung 2 entsprechend dem eingestellten Betriebsprogramm automatisch gewählt, kann jedoch von der Bedienperson mit dem Drucktaster 7 verändert werden. Im vorliegenden Fall wird von der Anzeigeeinrichtung 12 die Schleuderdrehzahl von 1100 U/min angezeigt. Die Schleuderdrehzahl und die laufende Betriebsphase zusammen mit dem Hinweis "Schnellgang>>" werden für sämtliche Betriebsphasen angezeigt. Nach dem Waschvorgang schließt sich die Schleuderphase an, in der gemäß Zustand e die Meldungen "Schnellgang>>" und "..schleudern.." angezeigt werden.

Am Ende des gesamten Betriebsprogramms wird Zustand f erreicht, in dem die Meldung "Programm fertig, bitte Wäsche entnehmen!" angezeigt wird, um einerseits die Bedienperson auf das Betriebsende hinzuweisen und andererseits zum Entnehmen der Wäsche aufzufordem.

Durch die erfindungsgemäße Lösung wird somit bei geringem Aufwand eine sichere und einfache Bedienung ermöglicht.

## Patentansprüche

1. Verfahren zum Bedienen eines programmgesteuerten Haushattgeräts (1) in Form eines Backofens, einer Kochmulde, eines Geschirrspülers, eines Kühlgerätes oder eines Wäschebehandlungsgerätes, bei dem zeitlich aufeinander folgend Bedienschritte vorgenommen werden können, mit einer Anzeigeeinrichtung (11), durch die wenigstens ein als nächster vorzunehmender Bedienschritt im Klartext angezeigt, **dadurch** zu seiner Vornahme aufgefordert und nach Vornahme der Bedienungshandlung durch eine Anzeige des nächsten Bedienungsschrittes ersetzt werden kann, **dadurch gekennzeichnet, dass** die Anzeigedauer einer Aufforderung zum Vornehmen eines nächsten Bedienschrittes, der nicht zwingend vorgenommen werden muss, begrenzt ist und nach Ablauf der Anzeigedauer ohne Vornahme der Bedienungshandlung auf eine Anzeige wenigstens des darauf folgenden vorzunehmenden Bedienschritts geschaltet wird.

2. Verfahren nach Anspruch 1, **dadurch gekennzeichnet, dass** alternativ zur Anzeige eines Bedienschritts der laufende Betriebsstatus angezeigt wird.

3. Verfahren nach Anspruch 2, **dadurch gekennzeichnet, dass** der laufende Betriebsstatus in Laufschrift angezeigt wird.

4. Verfahren nach einem der Ansprüche 1 bis 3, **dadurch gekennzeichnet, dass** eine Aufforderung zum Vornehmen eines Bedienschritts in blinkender Schrift angezeigt wird.

5. Verfahren nach einem der Ansprüche 2 bis 4, **dadurch gekennzeichnet, dass** der laufende Betriebsstatus zusammen mit einem Hinweis auf eine während des laufenden Betriebs aktivierbare Funktion angezeigt wird.

6. Verfahren nach Anspruch 5, **dadurch gekennzeichnet, dass** während des laufenden Betriebs ein Hinweis auf eine Schnellgangfunktion zum Überspringen des verbleibenden Teils der laufenden Betriebsphase angezeigt wird.

7. Verfahren nach einem der Ansprüche 2 bis 6, **dadurch gekennzeichnet, dass** die laufende Betriebsphase zusammen mit der nächsten Betriebsphase angezeigt wird.

8. Verfahren nach Anspruch 6 oder 7, **dadurch gekennzeichnet, dass** bei einer ersten Betätigung eines Schnellgangbedienelements (6) die nächste Betriebsphase angezeigt und bei der zweiten Betätigung des Schnellgangbedienelements (6) der verbleibende Teil der laufenden Betriebsphase übersprungen und die nächste Betriebsphase gestartet wird.

9. Bedienvorrichtung (2) mit Anzeigeeinrichtung (11) für ein programmgesteuertes Haushaltgerät (1) in Form eines Backofens, einer Kochmulde, eines Geschirrspülers, eines Kühlgerätes oder eines Wäschebehandlungsgerätes zur Durchführung eines Verfahrens nach einem der Ansprüche 1 bis 8, **dadurch gekennzeichnet, dass** die Anzeigeeinrichtung (11) derartig mit einer Programmsteuereinrichtung verbunden ist, dass sie einen vorzunehmenden Bedienschritt, der nicht zwingend vorgenommen werden muss, im Klartext nur eine gewisse Zeit lang anzeigt und danach ohne Vornahme der Bedienungshandlung wenigstens eine Aufforderung zum Vornehmen des darauf folgenden Bedienschritts anzeigt.

10. Bedienvorrichtung nach Anspruch 9, **dadurch gekennzeichnet, dass** sie ein Schnellgangbedienelement (6) aufweist, das zum Überspringen des verbleibenden Teils der laufenden Betriebsphase dient.

11. Bedienvorrichtung nach Anspruch 10, **dadurch gekennzeichnet, dass** das Schnellgangbedienelement (6) eine Drucktaste ist, die zwei Druckpunkte aufweist, dass nach Überschreiten des ersten Druckpunkts die nächste Betriebsphase anzeigbar und bei Überschreiten des zweiten Druckpunkts der Betrieb vom verbleibende Teil der laufenden Betriebsphase in die nächste Betriebsphase schaltbar ist.

## Claims

1. Method of operating a program-controlled domestic appliance (1) in the form of a baking oven, a cooker hob, a dishwasher, a cooling appliance or a laundry treatment appliance, in which operating steps successive in time can be undertaken, with a display equipment (11) by which at least one operating step as next to be undertaken can be displayed in plain text, performance thereof thereby required and, after performance of the operating action, replaced by a display of the next operating step, **characterised in that** the display duration of a request for performance of a next operating step which does not absolutely have to be undertaken is limited and after expiry of the display duration without performance of the operating action there is switching to a display of at least the operating step to be undertaken successively thereto.

2. Method according to claim 1, **characterised in that** the current operational status is displayed alternatively to display of an operating step.

3. Method according to claim 2, **characterised in that** the current operating status is displayed in moving text.

4. Method according to one of claims 1 to 3, **characterised in that** a requirement for performance of an operating step is displayed in flashing text.

5. Method according to one of claims 2 to 4, **characterised in that** the current operational status is displayed together with a reference to a function activatable during the continuing operation.

6. Method according to claim 5, **characterised in that** during the continuing operation a reference to a rapid transit function for jumping over the remaining part of the continuing operating phase is displayed.

7. Method according to one of claims 2 to 6, **characterised in that** the current operating phase is displayed together with the next operating phase.

8. Method according to claim 6 or 7, **characterised in that** in the case of first actuation of a rapid transit operating element (6) the next operating phase is displayed in the case of the second actuation of the rapid transit operating element (6) the remaining part of the current operating phase is left out and the next operating phase is started.

9. Operating device (2) with display equipment (11) for a program-controlled domestic appliance (1) in the form of a baking oven, a cooker hob, a dishwasher, a cooling appliance or a laundry treatment appliance for carrying out a method according to one of claims 1 to 8, **characterised in that** the display equipment (11) is connected with program control equipment in such a manner that it displays an operating step which is to be undertaken, but does not absolutely have to be undertaken, in plain text only for a certain length of time and thereafter, without performance of the operating action, displays at least one request for undertaking the operating step successive thereto.

10. Operating device according to claim 9, **characterised in that** it comprises a rapid transit operating element (6) which serves for jumping over the remaining part of the current operating phase.

11. Operating device according to claim 10, **characterised in that** the rapid transit operating device (6) is a pushbutton which has two working points, that after exceeding the first working point the next operating phase can be displayed and that on exceeding the second working point the operation can be switched over from the remaining part of the current operating phase to the next operating phase.

## Revendications

1. Procédé de commande d'un appareil ménager (1) commandé par programme, en forme de four, de plaque de cuisson, de lave-vaisselle, d'appareil frigorifique ou d'appareil de traitement de la lessive, dans lequel des étapes de commande se faisant suite les unes aux autres temporellement peuvent être entreprises, comprenant un dispositif d'affichage (11), par lequel au moins une étape de commande à entreprendre comme immédiatement suivante peut être indiquée en texte clair, incitée de ce fait à son exécution et après exécution de la manoeuvre de commande être remplacée par un affichage de l'étape de commande suivante, **caractérisé en ce que** la durée d'affichage d'une incitation à entreprendre une étape de commande suivante, ne devant pas être obligatoirement entreprise, est limitée et après écoulement de la durée d'affichage sans exécution de la manoeuvre de commande est commuté sur un affichage au moins de l'étape de commande à entreprendre y succédant.

2. Procédé selon la revendication 1, **caractérisé en ce qu'**alternativement à l'affichage d'une étape de commande, l'état de fonctionnement en cours est affiché.

3. Procédé selon la revendication 2, **caractérisé en ce que** l'état de fonctionnement en cours est affiché en écriture lumineuse.

4. Procédé selon l'une des revendications 1 à 3, **caractérisé en ce qu'**une incitation à entreprendre une étape de commande est affichée en écriture clignotante.

5. Procédé selon l'une des revendications 2 à 4, **caractérisé en ce que** l'état de fonctionnement en cours est affiché avec une information sur une fonction pouvant être activée pendant le fonctionnement en cours.

6. Procédé selon la revendication 5, **caractérisé en ce que** pendant le fonctionnement en cours une information est affichée sur une fonction à avance rapide pour sauter la partie restante de la phase de fonctionnement en cours.

7. Procédé selon l'une des revendications 2 à 6, **caractérisé en ce que** la phase de fonctionnement en cours est affichée conjointement avec la phase de fonctionnement suivante.

8. Procédé selon la revendication 6 ou 7, **caractérisé en ce que** lors d'un premier actionnement d'un élément de commande d'avance rapide (6) l'étape de fonctionnement suivante est affichée et lors du deuxième actionnement de l'élément de commande d'avance rapide (6) la partie restante de la phase de fonctionnement en cours est sautée et la phase de fonctionnement suivante est démarrée.

9. Dispositif de commande (2) avec un dispositif d'affichage (11) pour un appareil ménager (1) commandé par programme en forme de four, de plaque de cuisson, de lave-vaisselle, d'appareil frigorifique ou d'appareil de traitement de la lessive, destiné à exécuter un procédé selon l'une des revendications 1 à 8, **caractérisé en ce que** le dispositif d'affichage (11) est relié de manière telle à un dispositif de commande par programme qu'il affiche une étape de commande à entreprendre, ne devant pas être obligatoirement entreprise, en texte clair pendant un certain temps seulement et affiche ensuite sans exécution de la manoeuvre de commande au moins une incitation à entreprendre l'étape de commande y succédant;

10. Dispositif de commande selon la revendication 9, **caractérisé en ce qu'**il présente un élément de commande d'avance rapide (6) qui sert à sauter la partie restante de la phase de fonctionnement en cours.

11. Dispositif de commande selon la revendication 10, **caractérisé en ce que** l'élément de commande d'avance rapide (6) est un bouton-poussoir qui présente deux points de poussée, **caractérisé en ce qu'**en dépassant le premier point de poussée, la phase de fonctionnement suivante peut être affichée et en dépassant le deuxième point de poussée, le fonctionnement de la partie restante de la phase de fonctionnement en cours peut être commuté dans la phase de fonctionnement suivante.
